# EUROPÄISCHE PATENTANMELDUNG

(11) **EP 1 857 516 A1**
(43) Veröffentlichungstag der Anmeldung: **21.11.2007**
(21) Anmeldenummer: 07009697.9
(22) Anmeldetag: 15.05.2007
(51) Int. Cl.: C09J 7/04

(54) **Klebeband sowie Verfahren zu dessen Herstellung**

(30) Priorität: 16.05.2006 DE 102006022764
(71) Anmelder: certoplast Vorwerk & Sohn GmbH, 42285 Wuppertal (DE)
(72) Erfinder: Mundt Stefan, 40789 Monheim am Rhein (DE); Rambusch Peter, 42115 Wuppertal (DE)
(74) Vertreter: Nunnenkamp, Jörg

(57) **Zusammenfassung**

Gegenstand der vorliegenden Erfindung sind ein Klebeband sowie dessen Herstellung. Das Klebeband eignet sich besonders zur Bündelung von Kabeln in Automobilen und ist mit einem bandförmigen Spinnvliesträger aus Kunststofffilamenten, und mit zumindest einer ein- oder beidseitigen Kleberbeschichtung ausgerüstet. Erfindungsgemäß weist der Spinnvliesträger erste Kunststofffilamente mit einer ersten Erweichungstemperatur und zweite Kunststofffilamente mit zweiten, niedrigeren Erweichungstemperatur auf. Die zweiten Kunststofffilamente fungieren durch eine wenigstens die zweite Erweichungstemperatur erreichende Thermobehandlung zumindest teilweise als Bindemittel für den Spinnvliesträger.

## Beschreibung

Die Erfindung betrifft ein Klebeband, mit einem bandförmigen Spinnvliesträger aus Kunststofffilamenten, und mit zumindest einer ein- oder beidseitigen Kleberbeschichtung.

Ein solches Klebeband wird beispielhaft in der EP 0 942 057 B1 vorgestellt. Wie dort beschrieben, lässt sich ein Spinnvliesträger allgemein dadurch herstellen, dass die aus zugehörigen Spinndüsen ausgestoßenen Kunststofffilamente üblicherweise verstreckt und dann einer Ablage bzw. einem Ablegesystem zugeführt werden. Bei diesem Vorgang kann die Geschwindigkeit der Kunststofffilamente ein Mehrfaches der Ausstoßgeschwindigkeit aus der zugehörigen Spinndüse erreichen, so dass die Verstreckung stattfindet. Mit Hilfe einer Platte werden die Kunststofffilamente bzw. Filamentbündel abgelenkt und auf ein perforiertes endloses Band abgelegt, auf dem das dadurch gebildete Spinnvlies durch Ansaugen festgehalten und ggf. einer Verfestigung unterzogen wird. - Das bekannte Klebeband hat sich bewährt, insbesondere was dessen verminderte Reißdehnung und die Haftung der Klebebeschichtung und damit die Herstellung angeht.

Darüber hinaus werden zur Bündelung von Kabeln in Automobilen u. a. Klebebänder auf Basis eines Maliwattvlieses eingesetzt, welche sich dadurch auszeichnen, dass eine geringe Dehnung bei Zugbeanspruchung beobachtet wird, die hauptsächlich durch die Art und Dichte der obligatorischen Nähfäden vorgegeben wird. Außerdem zeichnen sich derartige Klebebänder auf Basis eines Maliwattvlieses durch eine insgesamt weiche und folglich montagefreundliche Gestaltung aus (vgl. DE 44 42 093 C2). Dafür ist der Aufbau der als Maliwattlies ausgeführten Gewebeträger durch die Verfestigung mit Hilfe eingebrachter Nähte äußerst aufwendig und damit kostenträchtig.

Diese insgesamt widerstreitenden Anforderungen hat man im Rahmen des EP-Patentes 1 123 958 B1 dadurch versucht zu beherrschen, dass an dieser Stelle ein Klebeband zum Einsatz kommt, welches auf einen durch Luft und/oder Wasserstrahlen vernadelten Vliesträger zurückgreift. Bei den in diesem Zusammenhang eingesetzten Fasern handelt es sich um so genannte Stapelfasern, also Kunststofffilamente endlicher Länge. Derartige Klebebänder haben sich ebenfalls bewährt, sind jedoch mit dem Problem behaftet, dass sie bei hoher Zugbeanspruchung eine große Dehnung zeigen und insbesondere bei einer längeren Lagerung einzelner Fasern/Filamente in Folge der Adhäsion des Klebers auf der unbeschichteten Vliesstoffrückseite ausgerissen werden können. Diese ausgerissenen Fasern oder Filamente können im Extremfall die Klebekraft des abgewickelten Klebebandes beeinträchtigen.

Ferner wird im Rahmen der DE 101 21 109 A1 ein textiles Klebeband vorgestellt, bei dem der Vliesträger aus endlosen Filamenten besteht, die durch Luft- und/oder Wasserstrahlen verfestigt sind. Auch in diesem Fall besteht die Gefahr des Filamentausrisses oder sogar einer insgesamt stattfindenden Delaminierung des Vliesstoffes beim Abrollen, und zwar in noch höherem Maße als bei den Stapelfasern. Das lässt sich darauf zurückführen, dass die Kunststofffilamente bzw. Endlosfilamente bei einem Spinnvliesträger glatt sind und in dem Spinnvliesträger meistens in einer Ebene schlaufenförmig und dachziegelartig abgelegt werden, folglich es zu der Ablösung einzelner Schichten respektive Ebenen bei einer langen Lagerung durch die Adhäsion des Klebers auf der unbeschichteten Vliesstoffrückseite kommen kann.

Schlussendlich sei noch auf die EP 0 995 782 B1 Bezug genommen, die sich zwar nicht mit einem bandförmigen Spinnvliesträger, sondern vielmehr mit einem Vlies aus Stapelfasern beschäftigt. Hier sind zwischen 2 % und 50 % der fraglichen Fasern des Vlieses Schmelzfasern und sollen für eine Verfestigung des Vliesträgers sorgen. Allerdings ist das Dehnungsverhalten des fraglichen Stapelfaservlieses unbefriedigend, so dass es unter hohen Zugkräften leicht zu einer Verjüngung und Überdehnung des Klebebandes bei der Bündelung von Kabelsätzen kommen kann. Das ist für die geplante Verarbeitung beim Bandagieren von Kabelbäumen in der Automobilindustrie nachteilig. Hier will die Erfindung insgesamt Abhilfe schaffen.

Der Erfindung liegt das technische Problem zugrunde, ein Klebeband der eingangs beschriebenen Ausgestaltung so weiterzuentwickeln, dass bei günstigen Herstellungskosten vorteilhafte Dehnungseigenschaften beobachtet werden, eine insgesamt weiche Ausrüstung des Klebebandes für eine montagefreundliche Verarbeitung vorliegt und ausdrücklich ein Filamentausriss oder die beschriebene Delaminierung des Spinnvliesträgers zuverlässig verhindert wird, und zwar auch bei langen Lagerzeiten.

Zur Lösung dieser technischen Problemstellung ist ein gattungsgemäßes Klebeband im Rahmen der Erfindung dadurch gekennzeichnet, dass der Spinnvliesträger erste Kunststofffilamente mit einer ersten Erweichungstemperatur und zweite Kunststofffilamente mit einer zweiten, niedrigeren Erweichungstemperatur aufweist, wobei die zweiten Kunststofffilamente durch eine wenigstens die zweite Erweichungstemperatur erreichende Thermobehandlung zumindest teilweise plastifiziert sind und als Bindemittel für den Spinnvliesträger fungieren.

Dabei hat es sich ergänzend als günstig erwiesen, wenn der Spinnvliesträger im Inneren eine Umorientierung der Kunststofffilamente aufweist, und zwar beispielsweise dergestalt, dass wenigstens einzelne durch die schlaufenförmig abgelegten Kunststofffilamente gebildete Ebenen miteinander verbunden sind. Diese Verbindung der einzelnen Ebenen untereinander kann durch übliche Verfestigungs- und/oder Verwirbelungsmethoden des Spinnvliesträgers erreicht werden, beispielsweise durch Vernadeln.

Ganz besonders bevorzugt ist in diesem Zusammenhang eine Verfestigung/ Umorientierung des Spinnvliesträgers dergestalt, dass der Spinnvliesträger mit Hilfe von Luft- und/oder Wasserstrahlen vernadelt bzw. verwirbelt wird und so bereits eine Verdichtung und die beschriebene gewünschte Umorientierung in einer zu den Ebenen senkrechten Richtung erfährt. In Folge dieser Umorientierung wird der Spinnvliesträger gleichsam vorverfestigt, wobei die Endverfestigung unverändert auf thermisch/chemischen Wege erfolgt, in dem wenigstens die mit der zweiten, niedrigeren, Erweichungstemperatur ausgerüsteten zweiten Kunststofffilamente zumindest teilweise in ihren schmelzfähigen Zustand überführt werden und somit gleichsam die Funktion des Bindemittels für die bei der Thermobehandlung nicht erweichenden ersten Kunststofffilamente übernehmen.

In diesem Zusammenhang versteht es sich, dass die Thermobehandlung so ausgelegt wird und erfolgt, dass die gleichsam die Hauptkomponente des Spinnvliesträgers bildenden ersten Kunststofffilamente (noch) nicht schmelzen, wohingegen die das gleichsam Bindemittel bildenden zweiten Kunststofffilamente bereits ihre Erweichungstemperatur erreichen, plastifiziert werden und folglich für die gewünschte (zusätzliche) Verfestigung des Spinnvliesträgers sorgen.

Insgesamt wird die beschriebene Vernadelung mit Luft- und/oder Wasserstrahlen als Vorverfestigung üblicherweise vorgenommen. Hierauf kann aber auch grundsätzlich verzichtet werden. Dann erfahren die einzelnen Lagen bzw. Ebenen der Kunststofffilamente des Spinnvliesträgers eine Verfestigung lediglich durch die ganz oder teilweise als Bindemittel fungierenden zweiten Kunststofffilamente. Der Gewichtsanteil dieser zweiten Kunststofffilamente im Spinnvliesträger kann dabei bis zu 50 Gew.-% betragen, liegt üblicherweise im Bereich zwischen 20% und 40% Gewichtsanteil an dem gesamten Spinnvliesträger, so dass die ersten Kunststofffilamente demzufolge einen Gewichtsanteil von 60 Gew.-% bis 80 Gew.-% einnehmen und folglich - wie beschrieben - die Hauptkomponente des Spinnvliesträgers darstellen.

Die angesprochene Thermobehandlung lässt sich vorteilhaft mit Hilfe eines Kalanders durch Thermoprägen realisieren. Üblicherweise verfügt der hierzu eingesetzt Kalander über eine Glattwalze und eine in Bezug auf einen Kalanderspalt gegenüberliegende Gravurwalze, wobei meistens beide die erforderliche Temperatur aufweisen, um wenigstens die zweiten Kunststofffilamente zumindest teilweise zu schmelzen. Das heißt, die eine oder beiden Oberflächentemperaturen der Walzen werden so eingestellt, dass die Erweichungstemperatur der ersten Kunststofffilamente noch nicht erreicht wird, wohingegen die Erweichungstemperatur der zweiten Kunststofffilamente erreicht oder geringfügig überschritten wird.

Gleichzeitig lässt sich mit Hilfe eines solchen Kalanders ein optimaler Liniendruck zur Verfestigung des Spinnvliesträgers einstellen und gewährleistet in Verbindung mit einer durch die Gravurwalze vorgegebenen punkt- oder trapezförmigen Gravur, dass insgesamt ein weicher und üblicherweise in Querrichtung handeinreißbarer und gegen Faserausriss beständiger Spinnvliesträger als Grundmaterial für das beschriebene Klebeband entsteht. Folgerichtig verfügt auch das Klebeband über die gewünschte weiche und damit montagefreundliche Gestaltung und lässt sich per Hand in Querrichtung einreißen. Damit werden vergleichbare Eigenschaften wie bei dem zuvor beschriebenen Klebeband auf Maliwattvliesträgerbasis erreicht, und zwar bei demgegenüber deutlich verringerten Kosten. Denn die erfindungsgemäß verfolgte Verfestigung - selbst wenn die beschriebene Vorverfestigung und Endverfestigung stattfindet - lässt sich mit hoher Durchlaufgeschwindigkeit und damit geringen Kosten im Vergleich zur Herstellung eines Maliwattvliesträgers durchführen.

Bei der Konfektionierung des Spinnvliesträgers aus den Kunststofffilamenten bzw. Endlosfäden haben sich grundsätzlich zwei verschiedene Vorgehensweisen als günstig erwiesen. Diese werden meistens getrennt voneinander verfolgt, können aber auch kombiniert werden.

So sind im Rahmen einer ersten Variante die ersten Kunststofffilamente und die zweiten Kunststofffilamente als jeweils getrennte (endlose) Kunststofffilamente ausgebildet, die beispielsweise aus unterschiedlichen und in vorteilhafter Weise in wechselnder Reihenfolge angeordneten Düsenöffnungen der Spinndüse austreten mögen. Diese beiden getrennt hergestellten ersten und zweiten Kunststofffilamente werden bei der Herstellung des Spinnvliesträgers schlaufenförmig in den jeweiligen Ebenen abgelegt, wobei die durch die Thermobehandlung zumindest teilweise schmelzenden zweiten Kunststofffilamente - wie beschrieben - als gleichsam Bindemittel fungieren.

Die im Prinzip gleiche Funktionsweise wird erreicht, wenn die ersten Kunststofffilamente und die zweiten Kunststofffilamente jeweils eine Einheit bilden und als zweikomponentige Kunststofffilamente bzw. Endlosfasern ausgeführt sind. In diesem Fall hat es sich bewährt, wenn die zweikomponentigen Kunststofffilamente bzw. Endlosfasern im Kreisquerschnitt unterschiedliche Segmente belegen oder beispielsweise so angeordnet sind, dass die erste Kunststoffkomponente (das erste Kunststofffilament) den Mantel und die zweite Kunststoffkomponente (das zweite Kunststofffilament) den Kern der zweikomponentigen Endlosfilamente oder umgekehrt bilden. Ebenso lassen sich die beiden Kunststofffilamente Seite an Seite extrudieren. Verschiedene Möglichkeiten für die Herstellung und Ausgestaltung solcher zweikomponentigen Kunststofffilamente bzw. Endlosfasern werden beispielsweise in der EP 1 048 771 A1 beschrieben, die ausdrücklich in Bezug genommen wird. - Sämtliche Vorgehensweisen, d.h auch die erste und die zweite Variante, lassen sich natürlich auch kombinieren.

Insgesamt beträgt die Feinheit der erfindungsgemäß eingesetzten Kunststofffilamente bis zu 8 dtex, liegt insbesondere zwischen 0,8 und 4 dtex. Als Kunststoffmaterialien haben sich Polymere wie Polyester zur Realisierung der ersten Kunststofffilamente und Polyamid als zweite Kunststofffilamente als günstig erwiesen. Im Fall von Polyethylenteraphtalat als Polyester beobachtet man beispielsweise einen Schmelzpunkt von ca. 256°C, wohingegen Polyamid (beispielsweise Polyamid 6) mit einer deutlich niedrigeren Schmelztemperatur von ca. 180°C ausgerüstet ist. Selbstverständlich können auch andere Kunststoffe eingesetzt werden, wie z.B. Kombinationen von Polyester (Polyethylenteraphtalat) und Copolyester, wobei der letztgenannte Kunststoff Schmelztemperaturen im Bereich von 220°C bis 225°C aufweisen mag. Selbstverständlich ist auch eine Kombination Polyester/Polypropylen (Schmelzpunkt ca. 140°C) denkbar.

Die Temperatur der Walzen des Kalanders für die Thermobehandlung wird entsprechend der eingesetzten Kunststofffilamente eingestellt und mag bis zu 210°C betragen. In Verbindung mit einem Druck im Bereich von 40 bis 60 N/mm wird die gewünschte Plastifizierung der zweiten Kunststofffilamente erreicht, so dass diese als Bindemittel fungieren können. Außerdem lässt sich durch die Einstellung des Drucks der Walzen des Kalanders (indem eine Walze, beispielsweise die Glattwalze, entsprechend gegenüber der Prägewalze angestellt wird) erreichen, dass die gewünschte Handeinreißbarkeit in Querrichtung des Spinnvliesträgers vorliegt. Denn die durch die Prägung vorgesehenen Klebeepunkte zur Verbindung der einzelnen Ebenen der Kunststofffilamente untereinander lassen sich von ihrer Anordnung und Größe her entsprechend vorgeben, so dass zwischen einzelnen Reihen der Klebepunkte unverändert gleichsam klebepunktfreie oder klebepunktarme Bereiche in Querrichtung des Spinnvliesträgers verbleiben, die das gewünschte Handeinreißen ermöglichen.

Im Ergebnis wird ein Klebeband zur Verfügung gestellt, welches insgesamt über die erforderliche Temperaturbeständigkeit für Anwendungen auf dem Automobilsektor verfügt, weil der Anwendungsbereich Temperaturen bis zu ca. 180 °C abdeckt, je nach dem welche Kunststofffilamente zur Realisierung des bandförmigen Spinnvliesträgers eingesetzt werden. Darüber hinaus eignet sich das Klebeband aufgrund seiner Medienbeständigkeit besonders für den beschriebenen Einsatzzweck. Gleichzeitig wird ein weicher Fall beobachtet, der praktisch demjenigen entspricht, wie er bisher nur mit aufwendigen Nähvliesträgern erreicht worden ist. Zugleich sind demgegenüber die Produktionskosten deutlich verringert, weil sich das erfindungsgemäße Klebeband mit wesentlich höherer Arbeitsgeschwindigkeit herstellen lässt im Vergleich zu einem Klebeband auf Basis eines Nähvliesträgers. Hierin sind die wesentlichen Vorteile zu sehen. Als Klebebeschichtung bzw. als Haftkleberbeschichtung für das Klebeband mag üblicher Klebstoff auf wässriger Baisis, auf Lösemittelbasis oder aufgetragen als Hot-Melt dienen. Die Dicke des Spinnvliesträger ist in der Regel im Bereich zwischen 0,1 und 1 mm, vorzugsweise 0,2 und 0,5 mm, angesiedelt. Sein Flächengewicht beträgt im Allgemeinen 40 g/m² bis 250 g/m², vorzugsweise 40 g/m² bis 90 g/m².

### Beispiel:

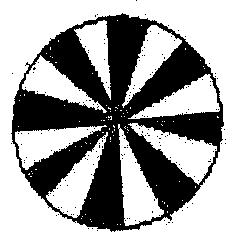

Das erfindungsgemäße Klebeband zur Bündelung von Kabeln in Automobilen wird zunächst einmal dadurch hergestellt, dass in einem ersten Schritt Filamente aus zwei Kunststoffkomponenten ersponnen werden, sogenannte Bikomponentenfäden oder Bikomponentenfilamente. Dabei kommt als erste Kunststoffkomponente Polyester und als zweite Kunststoffkomponente Polyamid zum Einsatz, und zwar in Gestalt eines aus den beiden Komponenten zusammengesetzten zweikomponentigen Endlosfilamentes. In diesem zweikomponentigen Endlosfilament beträgt der Gewichtsanteil des Polyesters bis zu ca. 70 Gew.-%, wohingegen das Polyamid bis zu ca. 30 Gew.-% vorliegt. In dem Faden sind die Polyester- und Polyamidsegmente im Querschnitt jeweils als Kreissegmente ausgeführt und alternierend nebeneinander angeordnet, wie dies die beigefügte einzige Zeichnung schematisch darstellt.

Die Spinngeschwindigkeit beim Herstellen der Kunststofffilamente bzw. der aus den zwei Kunststoffkomponenten bestehenden Endlosfilamente beträgt ca. 3000 m/min. Die Feinheit der zweikomponentigen Kunststofffilamente bzw. Endlosfilamente liegt im Bereich von ca. 2,3 dtex. Nach dem Ablegen der zweikomponentigen Kunststofffilamente auf einem perforierten endlosen Band wird das durch Ansaugen festgehaltene Spinnvlies einer Verfestigungszone zugeführt, in welcher das Spinnvlies bzw. der Spinnvliesträger einer Wasserstrahlbehandlung unterzogen wird. Hierbei sorgen die durch das Spinnvlies bzw. den bandförmigen Spinnvliesträger hindurchtretenden Wasserstrahlen dafür, dass der Spinnvliesträger verwirbelt wird und folglich die einzelnen Kunststofffilamente die eingangs bereits beschriebene Umorientierung erfahren. Der solchermaßen vorverfestigte und wasserstrahlverwirbelte Spinnvliesträger verfügt in der Regel über eine Höchstzugkraft in Längsrichtung von ca. 30 N/cm und eine Höchtzugkraft-Dehnung in Längsrichtung von ca. 50 %. Der Thermoschrumpf bei ca. 190°C liegt im Bereich von 0,6 % in Querrichtung und ca. 2 % Längsrichtung.

Nach dieser Vorverfestigung findet die Endverfestigung statt, indem der wasserstrahlverwirbelte Spinnvliesträger mittels eines Kalanders mit zwei Walzen geprägt wird. Die einer Glattwalze gegenüberliegende Prägewalze verfügt hierbei über eine Pyramidenstumpfgravur. Die Oberflächentemperaturen der beiden Walzen werden auf ca. 200°C eingestellt. Der Liniendruck beträgt 40 N/mm². Der auf diese Weise geprägte Spinnvliesträger verfügt über eine Höchstzugkraft in Längsrichtung von ca. 40 N/cm. Die Dehnung bei 20 N beträgt 2,5 % und die geprägte Oberfläche weist keinerlei Filamentausrisse auf, und zwar auch dann nicht, wenn die anschließend aufgerakelte Kleberbeschichtung mit der Rückseite des Spinnvliesträgers beim anschließenden Aufrollen zu Klebebandrollen in Kontakt kommt. Dies gilt selbst bei längeren Lagerzeiten.

Für alle erfindungsgemäßen Klebebänder gilt, dass eine HöchstzugkraftDehnung in Längsrichtung von nicht mehr als 50 % beobachtet wird, so dass eine anschließende Weiterverarbeitung durch Handeinreißen prädestiniert ist. Das heißt, im Gegensatz zu der EP 0 995 782 B1 werden deutlich geringere Dehnungswerte beobachtet. Dennoch zeichnet sich das beschriebene Klebeband durch eine ähnliche Handhabung wie ein solches auf Basis eines Maliwattvlieses aus, und zwar bei demgegenüber deutlich verringerten Kosten.

Gegenstand der Erfindung ist auch ein Verfahren zur Herstellung eines derartigen Klebebandes mit zumindest einer ein- oder beidseitigen Kleberbeschichtung, wobei das Klebeband mit einem bandförmigen Spinnvliesträger aus zweikomponentigen Kunststofffilamenten aufgebaut ist. Die erste Kunststoffkomponente besitzt eine erste Erweichungstemperatur und die zweite Kunststoffkomponente eine niedrigere zweite Erweichungstemperatur. Dabei werden die zweikomponentigen Kunststofffilamente auf eine Ablage aufgelegt und anschließend mit einer wenigstens die zweite Erweichungstemperatur erreichenden Temperatur thermobehandelt. Auf diese Weise wird die zweite Kunststoffkomponente zumindest teilweise plastifiziert und fungiert folglich als Bindemittel für den Spinnvliesträger.

## Patentansprüche

1. Klebeband, mit einem bandförmigen Spinnvliesträger aus Kunststofffilamenten, und mit zumindest einer ein- oder beidseitigen Kleberbeschichtung, **dadurch gekennzeichnet, dass** der Spinnvliesträger erste Kunststofffilamente mit einer ersten Erweichungstemperatur und zweite Kunststofffilamente mit einer zweiten, niedrigeren, Erweichungstemperatur aufweist, wobei die zweiten Kunststofffilamente durch eine wenigstens die zweite Erweichungstemperatur erreichende Thermobehandlung zumindest teilweise plastifiziert sind und als Bindemittel für den Spinnvliesträger fungieren.

2. Klebeband nach Anspruch 1, **dadurch gekennzeichnet, dass** die ersten Kunststofffilamente und die zweiten Kunststofffilamente als jeweils getrennte Endlosfäden ausgebildet sind und/oder jeweils eine Einheit als erste Kunststoffkomponente und zweite Kunststoffkomponente eines zweikomponentigen Endlosfilamentes bilden.

3. Klebeband nach Anspruch 2, **dadurch gekennzeichnet, dass** die zweikomponentigen Endlosfäden im Querschnitt unterschiedliche Segmente von einerseits der ersten Kunststoffkomponente und andererseits der zweiten Kunststoffkomponente aufweisen und/oder im Sinne von Kern/Mantel die beiden Kunststoffkomponenten beinhalten.

4. Klebeband nach einem der Ansprüche 1 bis 3, **dadurch gekennzeichnet, dass** der Spinnvliesträger eine Umorientierung der Kunststofffilamente aufweist, die beispielsweise durch eine Verwirbelung mit Wasser- und/oder Luftstrahlen erzielt worden ist.

5. Klebeband nach einem der Ansprüche 1 bis 4, **dadurch gekennzeichnet, dass** die Feinheit der Kunststofffilamente, und zwar sowohl der einzelnen Kunststofffilamente wie auch der zweikomponentigen Endlosfäden, bis zu ca. 8 dtex beträgt, insbesondere zwischen 0,8 und 4 dtex, angesiedelt ist.

6. Klebeband nach einem der Ansprüche 1 bis 5, **dadurch gekennzeichnet, dass** ein Kalander mit vorzugsweise gegenüberliegender Glattwalze und Prägewalze zur Thermobehandlung vorgesehen ist.

7. Verfahren zur Herstellung eines Klebebandes mit einem bandförmigen Spinnvliesträger aus Kunststofffilamenten, und mit zumindest einer ein- oder beidseitigen Kleberbeschichtung, wonach erste Kunststofffilamente mit einer ersten Erweichungstemperatur und zweite Kunststofffilamente mit einer zweiten Erweichungstemperatur auf eine Ablage aufgelegt und anschließend mit einer wenigstens die zweite Erweichungstemperatur erreichenden Temperatur thermobehandelt werden, so dass die zweiten Kunststofffilamente zumindest teilweise plastifiziert werden und als Bindemittel für den Spinnvliesträger fungieren.

8. Verfahren zur Herstellung eines Klebebandes mit einem bandförmigen Spinnvliesträger aus zweikomponentigen Kunststofffilamenten, und mit zumindest einer ein- oder beidseitigen Klebebeschichtung, wonach die erste Kunststoffkomponente eine erste Erweichungstemperatur und die zweite Kunststoffkomponente eine niedrigere zweite Erweichungstemperatur aufweist, und wonach die zweikomponentigen Kunststofffilamente auf eine Ablage aufgelegt und anschließend mit einer wenigstens die zweite Erweichungstemperatur erreichenden Temperatur thermobehandelt werden, so dass die zweite Kunststoffkomponente zumindest teilweise plastifiziert wird und als Bindemittel für den zweikomponentigen Spinnvliesträger fungiert.

9. Verfahren nach Anspruch 7 oder 8, **dadurch gekennzeichnet, dass** die Kunststofffilamente vor ihrer Thermobehandlung umorientiert werden, indem sie vorzugsweise eine Verwirbelung erfahren.

10. Verfahren nach Anspruch 9, **dadurch gekennzeichnet, dass** die Umorientierung mit Hilfe einer Vernadelung durch Luft- und/oder Wasserstrahlen durchgeführt wird.

11. Verwendung des Klebebandes nach einem der Ansprüche 1 bis 6 zur Bündelung von Kabeln in Automobilen.
